# EUROPEAN PATENT SPECIFICATION

(11) **EP 2 650 180 B1**
(45) Date of publication and mention of the grant of the patent: **22.10.2014**
(21) Application number: 12163600.5
(22) Date of filing: 10.04.2012
(51) Int. Cl.: B60R 22/46, B60R 21/0134, B60K 28/06, B60T 7/10, B60T 7/22

(54) **Method for triggering a motorized retractor for a safety belt system of a vehicle**
Verfahren zum Auslösen eines motorisierten Sicherheitsgurtstraffers eines Fahrzeugs
Procédé de déclenchement d'un enrouleur motorisé destiné à un système de ceinture de sécurité d'un véhicule

(43) Date of publication of application: 16.10.2013
(73) Proprietor: Autoliv Development AB, 447 83 Vårgårda (SE); PEUGEOT CITROËN AUTOMOBILES SA, 78140 Velizy-Villacoublay (FR)
(72) Inventor: Le Merrer, Yann, 75020 Paris (FR); Blaise, Philippe, 25490 Dampierre les Bois (FR); Charpin, Emmanuel, 25420 Voujeaucourt (FR)
(74) Representative: Müller Verweyen

(56) References cited:
- EP-A1- 1 407 951
- EP-A1- 1 593 561
- WO-A1-2004/065182
- DE-A1-102004 062 486
- DE-A1-102006 051 787
- US-B2- 7 668 633

## Description

The invention relates to a method for triggering a motorized retractor for a safety belt system of a vehicle.

Motorized retractors are used in general in safety belts of vehicle restraint systems to protect the occupant in case of accidents and/or to alert the occupant in a pre-phase of an accident or a possible dangerous situation.

The motorized retractor comprises a drive unit which is linked to a spindle onto which the safety belt is wound. When triggering the motorized retractor the drive unit, like for example an electric motor, drives the spindle in the winding direction and pulls therefore a possible belt slack out of the safety belt to tighten the safety belt closer to the occupant. As the safety belt abuts in the following closer on the occupant the restraint behavior and the load characteristic acting on the occupant can be improved. Furthermore the activation of the drive unit with tightening the safety belt can be used to warn the occupant, so that he can undertake the necessary actions to prevent the accident. The warning function can be also used to increase the attention of the driver in general when a risk situation is detected. The motorized retractor is activated in a reversible manner, which means that the safety belt is released when the risk situation is finished and no accident occurs.

Modern vehicles are nowadays provided with a complex sensor system, comprising for example an angle sensor, a pedal travel sensor, a brake pressure sensor, wheel speed sensors, acceleration sensors and a yaw rate sensor. Furthermore several sensors are known, which are directed to the ambience of the vehicle to detect possible collisions as early as possible or to detect for example a crossing of markings on the street.

The motorized retractor is triggered in condition of one signal or in condition of a signal generated by processing several sensor signals, wherein a signal processing unit is used to generate the signal according to a specified algorithm.

From the US 7,668,633 B2 it is known to trigger the motorized retractor in condition to a braking situation. The signal for triggering the motorized retractor can be generated by various signals representing the braking situation, like pedal acceleration, brake pressure, a time gap between the actuation of the different pedals etc.

Furthermore it is known an emergency brake system which enables a secure brake even in critical situations like a defect in the standard brake system or when the driver got problems with handling the vehicle. The emergency brake system can be actuated manually by the driver or by another occupant by pressing a button in the dashboard or somewhere else.

In view to that background it is the object of the invention to provide a method for triggering a motorized retractor which imparts an improved sense of safety to the occupant also in critical driving situations.

The invention suggests a method according to claim 1, wherein further advantageous embodiments of the invention are given in the subclaims.

According to the invention a method for triggering a motorized retractor for a safety belt system of a vehicle is suggested where the motorized retractor is triggered when an emergency brake system is activated to apply a different restraining force in the safety belt system, wherein the motorized retractor is triggered with increasing restraining forces during the activation of the emergency brake system, wherein the increase of the restraining force is performed preferably in steps, wherein the motorized retractor is triggered in steps after predetermined time periods related to the activation of the emergency brake system. The emergency brake system got the purpose to stop the vehicle in a controlled and safe manner when the vehicle and the occupants are in a critical driving situation. The emergency brake system is activated manually by the driver when the normally used brake system does not work properly for example or when the driver is not able to handle the normal brake system. In any case of activation of the emergency brake system a critical driving situation can be assumed. In this case the sense of safety of the occupant can be improved by triggering the motorized retractor to warn the occupant and increase the attention or to pull the safety belt closer to the occupant with an improved sense of safety. The increasing restraining force enables an adaption of the restraint characteristic to the driving situation, where it is assumed that the forces acting on the occupant during the activation of the emergency brake system are also increasing. The increase of the restraining forces in steps is further advantageous as the occupant feels the increase of the restraining force better, so that he got an improved sense of safety in the critical driving situation with a raised attention. The predetermined time periods are dimensioned according to a normal standard emergency brake procedure but they can also be adapted to the present velocity and individual driving situation.

Furthermore it is suggested that the motorized retractor is triggered after a predetermined time period in relation to the activation of the emergency brake system. The triggering of the motorized retractor with a time delay prevents an activation of the motorized retractor in case of an unintended activation of the emergency brake system and an immediate deactivation of the emergency brake system afterwards within the predetermined time period.

Furthermore it is suggested that the method comprises
- detecting a low friction road condition when an ABS-sensor generates a signal and a longitudinal deceleration sensor senses a deceleration which is lower than a predetermined value, or
   a brake pressure sensor detects a brake pressure, which exceeds a predetermined value and a longitudinal deceleration sensor senses a deceleration which is lower than a predetermined value, and
- triggering the motorized retractor after a predetermined time period when the low friction road condition is detected.

The low friction road condition increases the risk of the driving situation during the activation of the emergency brake system, so that the sense of safety of the occupant can be further improved, by increasing the restraining force to a higher level in this case.

When the activation of the emergency brake system is terminated either by a manual deactivation or by a stop of the vehicle the motorized retractor is triggered to apply no restraining force or a restraining force determined according to another algorithm. In this case the higher restraining force is not needed anymore, so that a restraining force equal to zero or for example a negative restraining force by pushing the safety belt off the spindle of the retractor with creating a belt slack. The belt slack is positive in this case since the occupant may deliberate himself or may be deliberated by a third person in an easy way after the critical driving situation.

In the following the invention shall be illustrated on the basis of preferred embodiments with reference to the accompanying drawings, wherein:
- Fig. 1: shows a schematic signal processing of the suggested method;
- Fig. 2: shows a diagram with the deceleration, the restraining force levels, the LowMu condition and the activation of the emergency brake system versus the time according to the suggested method.

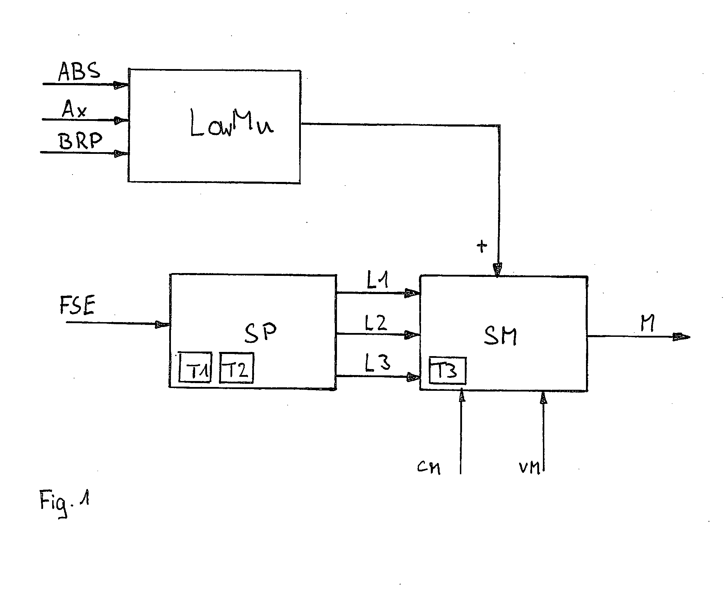

In the Figure 1 it is shown a schematic view of a LowMu evaluation unit, a signal processing unit SP and a severity management unit SM. The safety belt system of the vehicle itself is not shown but it can be regarded as well known in the state of the art. The motorized retractor is part of the safety belt system and is used to retract the safety belt by winding the belt onto a spindle. The motorized retractor itself is provided with a drive like an electric motor which drives the spindle in winding direction when being triggered. The electric motor is a preferred drive which is easy to trigger and to adapt to the spindle.

In the Figure 1 it is shown the signal processing unit SP with the stored time periods T1 and T2. When the emergency brake system is activated a signal FSE is guided to the input, which is further processed according to a later described algorithm to trigger the motorized retractor and to apply the first, second or third restraining force level L1, L2 or L3. The generated signal to trigger the motorized retractor is guided to a severity management unit SM in which the third time period T3 is stored. The severity management unit SM is connected with the LowMu evaluation unit. The LowMu evaluation unit is verifying if a LowMu situation or also called low friction road condition is present according to predefined later described criterias. When the LowMu condition is detected a signal is guided to the severity management unit SM where the signal is processed with the restraining force levels L1, L2 and L3 and the third time period T3 and possible values for a curve mitigation CM and/or velocity mitigation VM to the final signal M for triggering the motorized retractor.

All input signals, like the ABS-signal, the deceleration Ax, the BRP and the FSE status are preferably available on a data bus system of the vehicle, so there is no need for additional sensors to realize the suggested method.

The term LowMu is used for a low friction road condition which can result in a difficult driving situation for the vehicle where the wheels can perform at least in short time periods a slipping movement versus the road, or where the wheels can apply a limited amount of force to the ground.

The LowMu condition is detected when an ABS flag is set and the deceleration Ax in length direction of the vehicle is below a predetermined value. Alternatively or additionally the LowMu condition is also detected when the brake pressure BRP exceeds a predetermined value and the length deceleration Ax is below a predetermined value. The brake pressure sensor itself can be realized by a sensor sensing the pressure in the brake system or by a sensor sensing the force in the brake pedal or by a sensor sensing the brake pedal acceleration.

The restraining force levels L1, L2 and L3 might be adapted additionally in a dynamic manner in the severity management unit SM to consider special driving situations. The levels L1, L2 and L3 can be adapted for example by a curve mitigation CM or a velocity mitigation VM, where the course of the road or the speed of the vehicle are considered to increase or decrease the restraining force levels L1, L2 and L3 according to a predetermined algorithm or a predetermined relation.

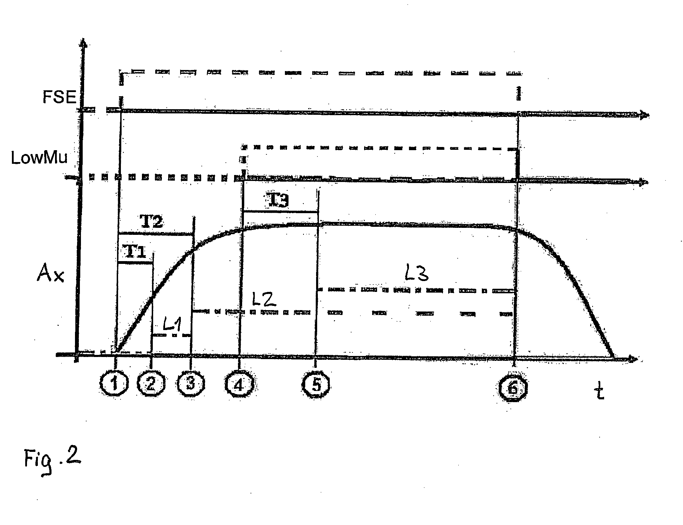

In the Figure 2 it is shown a possible course of the deceleration Ax, in case of an activation of the emergency brake system FSE with a detection of a low friction road condition LowMu and the applied restraining forces L1, L2 and L3 versus the time t.

At point 1 the emergency brake system FSE is activated by pressing a button by the driver or another occupant. The deceleration Ax in length direction starts to increase and a time counter is activated. After a first predetermined time period T1 the motorized retractor is triggered to apply a first level L1 of the restraining force to warn the driver and to raise the attention. After a predetermined second time period T2 the restraining force is raised to a second level L2. When the LowMu evaluation unit detects a low friction road condition at point 4 during the activation of the emergency brake system FSE another time counter starts. When a third time period T3 starting from point 4 is terminated the motorized retractor is triggered again at point 5 to raise the restraining force level further to a higher third level L3. The third time period T3 is set to avoid an unnecessary often change of the restraining force level, when the road condition changes within a short time interval.

When the emergency brake system FSE is deactivated at point 6 the motorized retractor is triggered again to apply a restraining force level equal to zero, where the safety belt is pulled only by the retraction spring in the retractor.

The restraining force levels L1, L2 and L3 can be generated by triggering the motorized retractor in condition to a signal which is processed in the signal processing unit SP and/or the severity management unit SM. The value for the low friction road condition LowMu can be guided to the signal processing unit SP as well as to the severity management unit SM. Furthermore the predetermined time periods T1, T2 and T3 can be stored and considered in the signal processing unit SP as well as in the severity management unit SM.

In the severity management unit SM further data like curve mitigation CM and velocity mitigation VM are considered to adapt the restraining force levels L1, L2 and L3 to the individual driving situation like a curve or a high velocity which influence the severity of a possible following accident.

## Claims

1. Method for triggering a motorized retractor for a safety belt system of a vehicle, wherein the motorized retractor is triggered when an emergency brake system (FSE) is activated to apply a different restraining force (L1,L2,L3) in the safety belt system, and
the motorized retractor is triggered with increasing the restraining force level (L1,L2,L3) during the activation of the emergency brake system (FSE), and
the restraining force level (L1,L2,L3) is increased in steps, **characterized in that**
the motorized retractor is triggered in steps after predetermined time periods (T1,T2) related to the activation of the emergency brake system (FSE).

2. Method according to claim 1, **characterized in**
- detecting a low friction road condition (LowMu) when an ABS-sensor generates a signal (ABS) and a longitudinal deceleration sensor senses a deceleration (Ax) which is lower than a predetermined value, or
a brake pressure sensor detects a brake pressure (BRP), which exceeds a predetermined value and a longitudinal deceleration sensor senses a deceleration (Ax) which is lower than a predetermined value, and
- triggering the motorized retractor after a predetermined time period (T3) when the low friction road condition (LowMu) is detected.

3. Method according to any one of the preceding claims, **characterized in that**
- the motorized retractor is triggered to apply no restraining force or a restraining force determined according to another algorithm, when the activation of the emergency brake system (FSE) is terminated.

4. Method according to any one of the preceding claims, wherein
- at least one of the restraining force levels (L1,L2,L3) is adapted in condition to the velocity and/or the curve of the actual movement of the vehicle.

## Patentansprüche

1. Verfahren zum Ansteuern eines motorgetriebenen Gurtaufrollers für ein Sicherheitsgurtsystem eines Fahrzeugs, wobei der motorgetriebene Gurtaufroller angesteuert wird, wenn ein Notbremssystem (FSE) aktiviert wird, um eine andere Rückhaltekraft (L1, L2, L3) in das Sicherheitsgurtsystem einzubringen, und
der motorgetriebene Gurtaufroller mit einer Erhöhung des Rückhaltekraftniveaus (L1, L2, L3) während der Aktivierung des Notbremssystems (FSE) angesteuert wird, und
das Rückhaltekraftniveau (L1, L2, L3) stufenweise erhöht wird, **dadurch gekennzeichnet, dass**
der motorgetriebene Gurtaufroller nach vorgegebenen Zeitspannen (T1, T2) bezogen auf die Aktivierung des Notbremssystems (FSE) stufenweise angesteuert wird.

2. Verfahren nach Anspruch 1, **gekennzeichnet durch**
- Erfassen eines reibungsarmen Fahrbahnzustands (LowMu), wenn ein ABS-Sensor ein Signal (ABS) erzeugt und ein Längsverzögerungssensor eine Verzögerung (Ax) registriert, welche geringer ist als ein vorgegebener Wert, oder
ein Bremsdrucksensor einen Bremsdruck (BRP) erfasst, welcher einen vorgegebenen Wert überschreitet, und ein Längsverzögerungssensor eine Verzögerung (Ax) registriert, welche geringer ist als ein vorgegebener Wert, und
- Ansteuern des motorgetriebenen Gurtaufrollers nach einer vorgegebenen Zeitspanne (T3), wenn der reibungsarme Fahrbahnzustand (LowMu) erfasst ist.

3. Verfahren nach einem der vorangegangenen Ansprüche, **dadurch gekennzeichnet, dass**
- der motorgetriebene Gurtaufroller angesteuert wird, um keine Rückhaltekraft oder eine gemäß einem anderen Algorithmus bestimmte Rückhaltekraft einzubringen, wenn die Aktivierung des Notbremssystems (FSE) abgeschlossen ist.

4. Verfahren nach einem der vorangegangenen Ansprüche, wobei
- mindestens eines der Rückhaltekraftniveaus (L1, L2, L3) in Abhängigkeit von der Geschwindigkeit und/oder der Kurve der realen Bewegung des Fahrzeugs angepasst wird.

## Revendications

1. Procédé de déclenchement d'un enrouleur motorisé destiné à un système de ceinture de sécurité d'un véhicule, dans lequel l'enrouleur motorisé est déclenché lorsqu'un système de frein d'urgence (FSE) est activé pour appliquer une force de retenue (L1, L2, L3) différente dans le système de ceinture de sécurité, et
l'enrouleur motorisé est déclenché par l'augmentation du niveau de force de retenue (L1, L2, L3) durant l'activation du système de frein d'urgence (FSE), et
le niveau de force de retenue (L1, L2, L3) augmente par étapes, **caractérisé en ce que** l'enrouleur motorisé est déclenché par étapes après des périodes de temps (T1, T2) prédéterminées associées à l'activation du système de frein d'urgence (FSE).

2. Procédé selon la revendication 1, **caractérisé en ce qu'**il consiste à :
- détecter une condition de route à faible frottement (LowMu) lorsqu'un capteur ABS génère un signal (ABS) et un capteur de décélération longitudinale détecte une décélération (Ax) inférieure à une valeur prédéterminée, ou un capteur de pression de frein détecte une pression de freinage (BRP) supérieure à une valeur prédéterminée et un capteur de décélération longitudinale détecte une décélération (Ax) inférieure à une valeur prédéterminée, et
- déclencher l'enrouleur motorisé après une période de temps (T3) prédéterminée lorsque la condition de route à faible frottement (LowMu) est détectée.

3. Procédé selon une quelconque des revendications précédentes, **caractérisé en ce que**
- l'enrouleur motorisé est déclenché pour n'appliquer aucune force de retenue ou pour appliquer une force de retenue déterminée en fonction d'un autre algorithme, lorsque l'activation du système de frein d'urgence (FSE) est terminée.

4. Procédé selon une quelconque des revendications précédentes, dans lequel
- au moins un des niveaux de force de retenue (L1, L2, L3) est adapté en condition à la vitesse et/ou la courbe du mouvement réel du véhicule.
